# FASCICULE DE BREVET EUROPEEN

(11) **EP 3 015 318 B1**
(45) Date de publication et mention de la délivrance du brevet: **05.06.2019**
(21) Numéro de dépôt: 15191931.3
(22) Date de dépôt: 28.10.2015
(51) Int. Cl.: B60R 19/34, F16F 7/12

(54) **DISPOSITIF PERFECTIONNÉ D'ABSORPTION DE L'ÉNERGIE D'UN CHOC, NOTAMMENT POUR UN VÉHICULE AUTOMOBILE**
PERFEKTIONIERTE VORRICHTUNG ZUR ABSORPTION DER AUFPRALLENERGIE, INSBESONDERE FÜR EIN KRAFTFAHRZEUG
IMPROVED DEVICE FOR ABSORBING THE ENERGY OF A CRASH, IN PARTICULAR FOR A MOTOR VEHICLE

(30) Priorité: 30.10.2014 FR 1460459
(43) Date de publication de la demande: 04.05.2016
(73) Titulaire: Flex-N-Gate France, 25405 Audincourt (FR)
(72) Inventeur: LAURENT, Claude, 25420 Voujeaucourt (FR)
(74) Mandataire: Lavoix

(56) Documents cités:
- EP-A2- 2 266 846
- DE-A1-102008 027 811
- JP-A- 2001 047 952
- JP-A- 2011 111 113
- US-B2- 6 923 484

## Description

La présente invention concerne un dispositif d'absorption de l'énergie d'un choc, notamment pour un véhicule automobile.

Un tel dispositif d'absorption est notamment destiné à équiper un pare-chocs avant ou arrière de véhicule automobile.

On connaît déjà, dans l'état de la technique, un dispositif d'absorption de l'énergie d'un choc, notamment pour un véhicule automobile, comportant une traverse s'étendant dans une direction transversale, et un élément tubulaire d'absorption, s'étendant dans une direction longitudinale perpendiculaire à la direction transversale, entre deux extrémités dont l'une coopère avec la traverse, et l'autre est reliée à la caisse du véhicule automobile. Un tel élément tubulaire d'absorption est également appelé « *crash box* ».

En cas de choc contre la traverse, l'énergie de ce choc est transmise à l'élément tubulaire d'absorption, qui dissipe cette énergie en se déformant.

L'invention a notamment pour but de perfectionner un tel dispositif d'absorption, notamment en lui permettant de résister de manière efficace aux efforts de traction appliqués à la traverse, et de permettre le maintien de la traverse après déformation de l'élément tubulaire d'absorption, le tout en ne perturbant pas la déformation de cet élément tubulaire d'absorption.

A cet effet, l'invention est définie par la revendication 1, son préambule étant connu de l'art antérieur le plus proche EP 2 266 846.

L'organe de liaison est fixé d'une part, par sa platine, à la traverse, et d'autre part, par les moyens de fixation, à l'élément tubulaire d'absorption. Ainsi, cet organe de liaison permet de maintenir la traverse contre l'élément tubulaire d'absorption, donc de résister aux efforts de traction appliqués à la traverse.

Par ailleurs, la partie de guidage étant agencée à l'intérieur de l'élément tubulaire, elle est propre à coulisser à l'intérieur de cet élément tubulaire lors d'un choc. En coulissant de cette manière, l'organe de liaison ne perturbe pas la déformation de l'élément tubulaire d'absorption.

En outre, du fait de ce coulissement, l'organe de liaison reste maintenu sur l'élément tubulaire après le choc. La platine restant fixée à la traverse, il apparaît que l'organe de liaison permet de maintenir la traverse sur l'élément tubulaire après un choc.

Un organe de liaison selon l'invention peut comporter en outre l'une ou plusieurs des caractéristiques suivantes, prises seules ou selon toute combinaison techniquement envisageable.
- La première paroi circonférentielle s'étend le long de l'axe longitudinal entre une première extrémité, solidarisée à la platine, et une seconde extrémité, solidaire de la paroi intermédiaire, la seconde paroi circonférentielle s'étend le long de l'axe longitudinal entre une première extrémité, solidaire à la paroi intermédiaire, et une seconde extrémité, et la première extrémité de la seconde paroi circonférentielle est située entre les première et seconde extrémités de la première paroi circonférentielle relativement à l'axe longitudinal.
- La partie de guidage est creuse, et loge un élément de renfort fixé dans cette partie de guidage en appui sur une surface intérieure de cette partie de guidage, à proximité des moyens de fixation.
- L'élément de renfort est en appui sur toute la circonférence de la surface intérieure de la partie de guidage.
- Les moyens de fixation comportent des saillies d'encliquetage, notamment trois saillies d'encliquetage réparties circonférentiellement sur la partie de guidage, chaque saillie d'encliquetage étant destiné à coopérer avec une encoche complémentaire ménagée dans l'élément tubulaire d'absorption.

L'invention concerne également un dispositif d'absorption de l'énergie d'un choc, notamment pour un véhicule automobile, comportant une traverse s'étendant dans une direction transversale, et au moins un élément tubulaire d'absorption, s'étendant dans une direction longitudinale perpendiculaire à la direction transversale, entre deux extrémités dont l'une coopère avec la traverse, caractérisé en ce qu'il comporte, pour chaque élément tubulaire, un organe de liaison tel que défini précédemment, dont la platine est solidarisée à la traverse, et dont la partie de guidage est logée dans l'élément tubulaire d'absorption, et fixée à cet élément tubulaire d'absorption par les moyens de fixation.

Un dispositif d'absorption selon l'invention peut comporter en outre l'une ou plusieurs des caractéristiques suivantes, prises seules ou selon toute combinaison techniquement envisageable.
- Les moyens de fixation comportent des saillies d'encliquetage, notamment trois saillies d'encliquetage réparties circonférentiellement sur la partie de guidage, chaque saillie d'encliquetage coopérant avec une encoche complémentaire ménagée dans l'élément tubulaire d'absorption.
- L'élément tubulaire d'absorption est réalisé en un matériau composite, comprenant une matrice et des fibres continues.

L'invention sera mieux comprise à la lecture de la description qui va suivre, donnée uniquement à titre d'exemple et faite en se référant aux figures annexées, parmi lesquelles :
- la figure 1 est une vue schématique du dessus d'un dispositif d'absorption selon un exemple de mode de réalisation de l'invention ;
- la figure 2 est une vue en perspective d'un élément tubulaire d'absorption équipant le dispositif d'absorption de la figure 1 ;
- la figure 3 est une vue en perspective d'un organe de liaison équipant le dispositif d'absorption de la figure 1 ;
- la figure 4 est une vue schématique en coupe de l'organe de liaison de la figure 3 logé dans l'élément tubulaire d'absorption de la figure 2 ;
- la figure 5 est une vue similaire à la figure 4 de l'organe de liaison logé dans l'élément tubulaire, lorsque cet élément tubulaire est déformé après un choc ;
- la figure 6 est une vue similaire à la figure 4 d'un organe de liaison assemblé avec un élément tubulaire selon un deuxième exemple de mode de réalisation de l'invention.

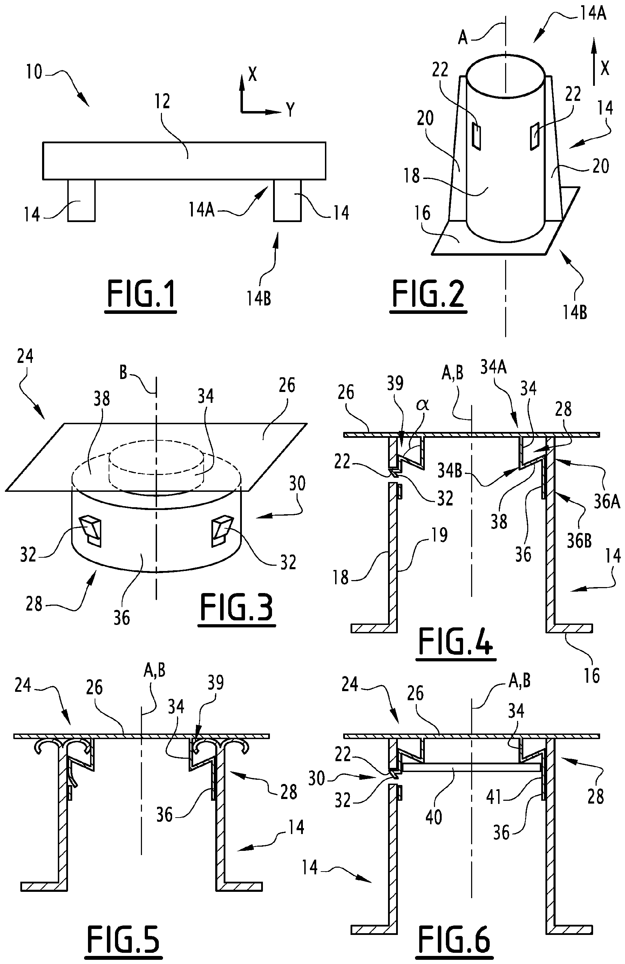

On a représenté, sur la figure 1, un dispositif 10 d'absorption de l'énergie d'un choc, notamment destiné à équiper un véhicule automobile. Un tel dispositif d'absorption 10 est notamment destiné à être agencé dans un pare-chocs avant ou arrière du véhicule automobile.

Le dispositif d'absorption 10 comporte une traverse 12 de type classique, s'étendant dans une direction transversale Y.

Le dispositif d'absorption 10 comporte par ailleurs au moins un élément tubulaire d'absorption 14, s'étendant dans une direction longitudinale X perpendiculaire à la direction transversale Y, entre une première extrémité 14A coopérant avec la traverse 12, et une deuxième extrémité 14B destinée à être fixée à un élément structurel du véhicule automobile (non représenté).

Dans l'exemple décrit, le dispositif d'absorption 10 comporte deux éléments tubulaires d'absorption 14, agencés chacun sensiblement à une extrémité respective de la traverse 12 dans la direction transversale.

Les deux éléments tubulaires 14 étant identiques, seul l'un d'entre eux sera maintenant décrit, notamment en référence aux figures 2 à 6.

Chaque élément tubulaire d'absorption 14 est avantageusement réalisé en un matériau composite, comprenant une matrice et des fibres continues, tissées ou non.

Dans l'exemple représenté, chaque élément tubulaire 14 comporte, à sa deuxième extrémité 14B, une plaquette 16 pour sa fixation à l'élément structurel. Une telle plaquette 16 est de type classique, et elle est destinée à être fixée à l'élément structurel à l'aide de moyens de fixation classiques, par exemple par vissage.

L'élément tubulaire 14 comporte un corps creux 18 solidaire de la plaquette 16, s'étendant le long de la direction longitudinale X entre une extrémité arrière liée à cette plaquette 16 et une extrémité avant. Dans l'exemple décrit, ce corps creux 18 est formé par une paroi de forme générale cylindrique à section transversale circulaire, définie autour d'un premier axe longitudinal A parallèle à la direction longitudinale X.

L'élément tubulaire 14 comporte avantageusement au moins une ailette 20 s'étendant le long du corps 18, parallèlement au premier axe longitudinal A, chaque ailette 20 étant solidaire du corps 18 et de la plaquette 16. Dans l'exemple décrit, l'élément tubulaire 14 comporte deux ailettes 20 agencées de part et d'autre de l'axe longitudinal A.

L'élément tubulaire 14 comporte enfin des encoches 22, ménagées dans le corps creux 18, destinés à la fixation d'un organe de liaison 24, comme cela sera décrit ultérieurement.

L'organe de liaison 24, notamment représenté sur la figure 3, comporte une platine 26 destinée à être solidarisée à la traverse 12, par exemple par vissage ou en variante par tout type de moyens de fixation envisageables. La platine 26 est sensiblement plane et perpendiculaire à l'axe longitudinale A.

L'organe de liaison 24 comporte par ailleurs une partie de guidage 28, solidaire de la platine 26, s'étendant depuis cette platine 26 dans la direction d'un second axe longitudinal B. Avantageusement, la partie de guidage 28 présente une forme générale de révolution autour du second axe longitudinal B. Cette partie de guidage 28 est destinée à être logée dans l'élément tubulaire d'absorption 14, et plus particulièrement dans le corps creux 18.

Avantageusement, la platine 26 présente des dimensions transversales supérieures au diamètre du corps creux 18, si bien que l'extrémité avant du corps creux 18 repose sur la platine 26.

Cette partie de guidage 28 comporte des moyens 30 de fixation à l'élément tubulaire d'absorption 14. En particulier, les moyens de fixation 30 comportent des saillies d'encliquetage 32 s'étendant radialement en saillie depuis la partie de guidage 28. Par exemple, les moyens de fixation 30 comportent trois saillies d'encliquetage 32 réparties circonférentiellement sur la partie de guidage 28.

Chaque saillie d'encliquetage 32 est destinée à coopérer avec une encoche 22 complémentaire ménagée dans l'élément tubulaire d'absorption 14, lorsque la partie de guidage 28 est logée dans cet élément tubulaire d'absorption 14.

Conformément à l'exemple décrit, la partie de guidage 28 comporte une première paroi circonférentielle 34 solidaire de la platine 26 (par exemple par soudage), une seconde paroi circonférentielle 36, portant les moyens de fixation 30, et une paroi intermédiaire 38 reliant les première 34 et seconde 36 parois circonférentielles entre elles.

Par exemple, la première paroi circonférentielle 34 présente une forme générale cylindrique à section transversale circulaire, s'étendant le long du second axe longitudinal B, et la seconde paroi circonférentielle 36 présente également une forme générale cylindrique à section transversale circulaires s'étendant le long du second axe longitudinal B.

Les dimensions transversales de la première paroi circonférentielle 34 sont inférieures aux dimensions transversales de la seconde paroi circonférentielle 36. Dans l'exemple décrit, le diamètre du cylindre formé par la première paroi circonférentielle 34 est inférieur au diamètre du cylindre formé par la seconde paroi circonférentielle 36.

La paroi intermédiaire 38 forme donc un épaulement entre la première paroi circonférentielle 34 et la seconde paroi circonférentielle 36.

Comme cela est notamment visible sur la figure 4, la première paroi circonférentielle 34 s'étend, le long du second axe longitudinal B, entre une première extrémité 34A solidarisée à la platine 26, et une seconde extrémité 34B solidaire de la paroi intermédiaire 38. La seconde paroi circonférentielle 36 s'étend quant à elle, le long du second axe longitudinal B, entre une première extrémité 36A solidarisée à la paroi intermédiaire 38, et une seconde extrémité 36B libre.

La première extrémité 36A de la seconde paroi circonférentielle 36 est située entre les première 34A et seconde 34B extrémités de la première paroi circonférentielle 34 relativement au second axe longitudinal B. En d'autres termes, la paroi intermédiaire 38 est inclinée par rapport à la première paroi circonférentielle 34, la tangente à la paroi intermédiaire 38 au niveau de sa liaison avec la première paroi circonférentielle 34 formant avec cette première paroi circonférentielle 34 un angle α inférieur à 90°.

Lorsque l'organe de liaison 24 est inséré dans l'élément tubulaire 14, le premier axe longitudinal A est confondu avec le second axe longitudinal B, et parallèle à la direction longitudinale X.

Cet organe de liaison 24 étant solidarisé à la traverse 12 et à l'élément tubulaire 14, il permet au dispositif d'absorption 10 de résister à des efforts de traction appliqués à la traverse 12 dans la direction longitudinale X, en transmettant ces efforts à l'élément structurel du véhicule automobile, à travers l'organe de liaison 24 et l'élément tubulaire 14.

La forme de la partie de guidage 28 permet d'améliorer cette résistance à la traction dans la direction longitudinale X. En effet, du fait de cette forme, un effort de traction appliqué à la traverse 12 tend à plaquer la seconde paroi circonférentielle 36 contre une surface interne 19 du corps creux 18.

Lorsqu'un effort de traction est appliqué sur la traverse 12, donc sur la platine 26, cet effort est transmis à la première paroi circonférentielle 34. La seconde paroi circonférentielle 36 étant fixée à l'élément tubulaire 14, cet effort tend à redresser la paroi intermédiaire 38, augmentant ainsi l'angle a. La seconde paroi circonférentielle 36 a ainsi tendance à s'écarter radialement de la première paroi circonférentielle 34, se plaquant ainsi fortement contre la surface interne 19 du corps creux 18, et augmentant ainsi la friction entre cette seconde paroi circonférentielle 36 et cette surface interne 19 dans la direction longitudinale X.

En d'autres termes, un effort de traction appliqué à la traverse 12 a pour effet de générer un effort radial de la seconde paroi circonférentielle 36 sur le corps creux 18, augmentant la friction entre cette seconde paroi circonférentielle 36 et ce corps creux 18, et s'opposant ainsi audit effort de traction.

La forme de la partie de guidage 28, décrite précédemment, permet également à l'élément tubulaire creux 14 de se déformer librement en cas de choc, sans s'opposer à cette déformation.

En effet, comme cela est représenté sur la figure 5, un tel élément tubulaire 14, lorsqu'il se déforme en cas de choc, voit habituellement la paroi de son corps creux 18 se séparer radialement en deux parties, l'une s'écartant vers l'intérieur et l'autre vers l'extérieur de ce corps creux 18.

Puisque la première paroi circonférentielle 34 présente un diamètre inférieur à celle de la seconde paroi circonférentielle 36, un renfoncement annulaire 39 est formé autour de la première paroi circonférentielle 34. L'élément tubulaire 14 peut alors se déformer librement à l'intérieur de ce renfoncement annulaire.

Ainsi, il apparaît clairement que le dispositif d'absorption 10 selon l'invention résiste aux efforts de traction, permet le maintien de la traverse 12 après déformation de l'élément tubulaire 14, et laisse libre la déformation de l'élément tubulaire 14.

On a représenté, sur la figure 6, un organe de liaison 24 assemblé avec un élément tubulaire 14, pour un dispositif d'absorption selon un deuxième exemple de mode de réalisation de l'invention. Sur cette figure 6, les éléments analogues à ceux des figures précédentes sont désignés par des références identiques.

Conformément à ce deuxième mode de réalisation, la partie de guidage 28 de l'organe de liaison 24 est creuse, et elle loge un élément de renfort 40, fixé dans cette partie de guidage 28 en appui sur une surface intérieure 41 de cette partie de guidage, à proximité des moyens de fixation 30. Plus particulièrement, cet élément de renfort 40 est fixé en appui sur la surface intérieure 41 de la seconde paroi circonférentielle 36.

Cet élément de renfort 40 est en appui sur toute la circonférence de cette surface intérieure 41. Ainsi, dans l'exemple représenté, l'élément de renfort 40 a une forme générale de disque.

Cet élément de renfort 40 empêche tout déplacement radial de la seconde paroi circonférentielle 36 vers le second axe longitudinal B, et empêche donc tout déplacement radial des saillies 32 vers ce second axe longitudinal B. En d'autres termes, cet élément de renfort 40 empêche les saillies 32 de se désolidariser des encoches 22.

On notera que l'invention n'est pas limitée au mode de réalisation précédemment décrit, mais pourrait présenter diverses variantes.

## Revendications

1. Organe de liaison (24) destiné à équiper un dispositif (10) d'absorption de l'énergie d'un choc, notamment pour un véhicule automobile, comportant une traverse (12) s'étendant dans une direction transversale (Y), et au moins un élément tubulaire d'absorption (14), s'étendant dans une direction longitudinale (X) perpendiculaire à la direction transversale (Y), entre deux extrémités (14A, 14B) dont l'une (14A) coopère avec la traverse (12), l'organe de liaison (24) comportant une platine (26) destinée à être solidarisée à la traverse (12), et une partie de guidage (28), solidaire de la platine (26), destinée à être logée dans l'élément tubulaire d'absorption (14), et comportant des moyens (30) de fixation à l'élément tubulaire d'absorption (14), **caractérisé en ce que** la partie de guidage (28) présente une forme générale de révolution autour d'un axe longitudinal (B) et comporte une première paroi circonférentielle (34), solidaire de la platine (26), une seconde paroi circonférentielle (36), portant les moyens de fixation (30), et une paroi intermédiaire (38) reliant les première (34) et seconde (36) parois circonférentielles entre elles, les dimensions transversales de la première paroi circonférentielle (34) étant inférieures aux dimensions transversales de la seconde paroi circonférentielle (36).

2. Organe de liaison (24) selon la revendication 1, dans lequel :
- la première paroi circonférentielle (34) s'étend le long de l'axe longitudinal (B) entre une première extrémité (34A), solidarisée à la platine (26), et une seconde extrémité (34B), solidaire de la paroi intermédiaire (38),
- la seconde paroi circonférentielle (36) s'étend le long de l'axe longitudinal (B) entre une première extrémité (36A), solidaire à la paroi intermédiaire (38), et une seconde extrémité (36B),
- la première extrémité (36A) de la seconde paroi circonférentielle (36) est située entre les première (34A) et seconde (34B) extrémités de la première paroi circonférentielle (34) relativement à l'axe longitudinal (B).

3. Organe de liaison (24) selon l'une quelconque des revendications précédentes, dans lequel la partie de guidage (28) est creuse, et loge un élément de renfort (40) fixé dans cette partie de guidage (28) en appui sur une surface intérieure (41) de cette partie de guidage (28), à proximité des moyens de fixation (30).

4. Organe de liaison (24) selon la revendication 3, dans lequel l'élément de renfort (40) est en appui sur toute la circonférence de la surface intérieure (41) de la partie de guidage (28).

5. Organe de liaison (24) selon l'une quelconque des revendications précédentes, dans lequel les moyens de fixation (30) comportent des saillies d'encliquetage (32), notamment trois saillies d'encliquetage (32) réparties circonférentiellement sur la partie de guidage (28), chaque saillie d'encliquetage étant destiné à coopérer avec une encoche complémentaire (22) ménagée dans l'élément tubulaire d'absorption (14).

6. Dispositif (10) d'absorption de l'énergie d'un choc, notamment pour un véhicule automobile, comportant une traverse (12) s'étendant dans une direction transversale (Y), et au moins un élément tubulaire d'absorption (14), s'étendant dans une direction longitudinale (X) perpendiculaire à la direction transversale (Y), entre deux extrémités (14A, 14B) dont l'une (14A) coopère avec la traverse (12), **caractérisé en ce qu'**il comporte, pour chaque élément tubulaire (14), un organe (24) de liaison selon l'une quelconque des revendications 1 à 5, dont la platine (26) est solidarisée à la traverse (12), et dont la partie de guidage (28) est logée dans l'élément tubulaire d'absorption (14), et fixée à cet élément tubulaire d'absorption (14) par les moyens de fixation (30).

7. Dispositif (10) d'absorption selon la revendication 6, dans lequel les moyens de fixation (30) comportent des saillies d'encliquetage (32), notamment trois saillies d'encliquetage (32) réparties circonférentiellement sur la partie de guidage (28), chaque saillie d'encliquetage coopérant avec une encoche complémentaire (22) ménagée dans l'élément tubulaire d'absorption (14).

8. Dispositif d'absorption (10) selon la revendication 6 ou 7, dans lequel l'élément tubulaire d'absorption (14) est réalisé en un matériau composite, comprenant une matrice et des fibres continues.

## Patentansprüche

1. Verbindungsorgan (24), das dazu bestimmt ist, eine Vorrichtung (10) zur Absorption von Stoßenergie auszustatten, insbesondere für ein Kraftfahrzeug, aufweisend einen Querträger (12), der sich in eine Querrichtung (Y) erstreckt, und wenigstens ein rohrförmiges Absorptionselement (14), das sich in eine Längsrichtung (X) senkrecht zu der Querrichtung (Y) erstreckt zwischen zwei Enden (14A, 14b), von denen das eine (14A) mit dem Querträger (12) zusammenwirkt, wobei das Verbindungsorgan (24) aufweist eine Platte (26), die dazu bestimmt ist, um mit dem Querträger (12) fest verbunden zu sein, und einen Führungsabschnitt (28), der mit der Platte (26) fest verbunden ist und der dazu bestimmt ist, in dem rohrförmigen Absorptionselement (14) untergebracht zu sein, und aufweisend Mittel (30) zur Fixierung an dem rohrförmigen Absorptionselement (14), **dadurch gekennzeichnet, dass** der Führungsabschnitt (28) im Allgemeinen eine Rotationskörper-Gestalt um eine Längsachse (B) hat und aufweist eine erste Umfangswand (34), die fest mit der Platte (26) verbunden ist, und eine zweite Umfangswand (36), die die Mittel zur Fixierung (30) trägt, und eine Zwischenwand (38), welche die erste (34) und die zweite (36) Umfangswand miteinander verbindet, wobei die Querabmessungen der ersten Umfangswand (34) kleiner sind als die Querabmessungen der zweiten Umfangswand (36).

2. Verbindungsorgan (24) gemäß Anspruch 1, wobei:
- sich die erste Umfangswand (34) entlang der Längsachse (B) zwischen einem ersten Ende (34A), das mit der Platte (26) fest verbunden ist, und einem zweiten Ende (34B) erstreckt, das mit der Zwischenwand (38) fest verbunden ist,
- sich die zweite Umfangswand (36) entlang der Längsachse (B) zwischen einem ersten Ende (36A), das mit der Zwischenwand (38) fest verbunden ist, und einem zweiten Ende (36B) erstreckt,
- das erste Ende (36A) der zweiten Umfangswand (36) bezüglich der Längsachse (B) zwischen dem ersten (34A) und dem zweiten (34B) Ende der ersten Umfangswand (34) angeordnet ist.

3. Verbindungsorgan (24) gemäß irgendeinem der vorhergehenden Ansprüche, wobei der Führungsabschnitt (28) hohl ist und ein Verstärkungselement (40) unterbringt, das in diesem Führungsabschnitt (28) fixiert ist in Anlage an eine Innenfläche (41) dieses Führungsabschnitts (28) in der Nähe der Mittel zur Fixierung (30).

4. Verbindungsorgan (24) gemäß Anspruch 3, wobei das Verstärkungselement (40) über den ganzen Umfang der Innenfläche (41) des Führungsabschnitts (28) in Anlage ist.

5. Verbindungsorgan (24) gemäß irgendeinem der vorhergehenden Ansprüche, wobei die Mittel zur Fixierung (30) Rastvorsprünge (32), insbesondere drei Rastvorsprünge (32), aufweisen, die umfänglich über den Führungsabschnitt (28) verteilt sind, wobei jeder Rastvorsprung dazu bestimmt ist, mit einer komplementären, in dem rohrförmigen Absorptionselement (14) ausgebildeten Aussparung (22) zusammenzuwirken.

6. Vorrichtung (10) zur Absorption von Stoßenergie, insbesondere für ein Kraftfahrzeug, aufweisend einen Querträger (12), der sich in eine Querrichtung (Y) erstreckt, und wenigstens ein rohrförmiges Absorptionselement (14), das sich in eine Längsrichtung (X) senkrecht zu der Querrichtung (Y) zwischen zwei Enden (14A, 14B) erstreckt, von denen eines (14A) mit dem Querbalken (12) zusammenwirkt, **dadurch gekennzeichnet, dass** sie aufweist, für jedes rohrförmige Element (14), ein Verbindungsorgan (24) gemäß irgendeinem der Ansprüche 1 bis 5, dessen Platte (26) fest mit dem Querbalken (12) verbunden ist und dessen Führungsabschnitt (28) in dem rohrförmigen Absorptionselement (14) untergebracht ist und an diesem rohrförmigen Absorptionselement (14) fixiert ist mittels Mitteln zur Fixierung (30).

7. Vorrichtung (10) zur Absorption gemäß Anspruch 6, wobei die Mittel zur Fixierung (30) Rastvorsprünge (32), insbesondere drei Rastvorsprünge (32), aufweisen, die umfänglich über den Führungsabschnitt (28) verteilt sind, wobei jeder Rastvorsprung mit einer komplementären Aussparung (22) zusammenwirkt, die in dem rohrförmigen Absorptionselement (14) ausgebildet ist.

8. Vorrichtung zur Absorption (10) gemäß Anspruch 6 oder 7, wobei das rohrförmige Absorptionselement (14) aus einem Verbundelement realisiert ist, das eine Matrix und kontinuierliche Fasern aufweist.

## Claims

1. Connecting member (24) for fitting to a device (10) for absorbing the energy of an impact, especially for a motor vehicle, comprising a cross-member (12) extending in a transverse direction (Y) and at least one tubular absorption element (14) extending in a longitudinal direction (X) perpendicular to the transverse direction (Y) between two ends (14A, 14B), one (14A) of which cooperates with the cross-member (12), the connecting member (24) comprising a plate (26) which is to be attached to the cross-member (12), and a guide portion (28), secured to the plate (26), which is to be housed in the tubular absorption element (14), and comprising means (30) for fixing to the tubular absorption element (14), **characterised in that** the guide portion (28) has a general form of revolution about a longitudinal axis (B) and comprises a first circumferential wall (34), secured to the plate (26), a second circumferential wall (36) carrying the fixing means (30), and an intermediate wall (38) connecting the first circumferential wall (34) and the second circumferential wall (36) together, the transverse dimensions of the first circumferential wall (34) being smaller than the transverse dimensions of the second circumferential wall (36).

2. Connecting member (24) according to claim 1, wherein:
- the first circumferential wall (34) extends along the longitudinal axis (B) between a first end (34A), attached to the plate (26), and a second end (34B), secured to the intermediate wall (38),
- the second circumferential wall (36) extends along the longitudinal axis (B) between a first end (36A), connected to the intermediate wall (38), and a second end (36B),
- the first end (36A) of the second circumferential wall (36) is situated between the first end (34A) and the second end (34B) of the first circumferential wall (34) relative to the longitudinal axis (B).

3. Connecting member (24) according to any one of the preceding claims, wherein the guide portion (28) is hollow and houses a reinforcing element (40) fixed in the guide portion (28) in abutment on an inside surface (41) of the guide portion (28), close to the fixing means (30).

4. Connecting member (24) according to claim 3, wherein the reinforcing element (40) is in abutment on the entire circumference of the inside surface (41) of the guide portion (28).

5. Connecting member (24) according to any one of the preceding claims, wherein the fixing means (30) comprise locking projections (32), especially three locking projections (32) distributed circumferentially on the guide portion (28), each locking projection being intended to cooperate with a complementary notch (22) formed in the tubular absorption element (14).

6. Device (10) for absorbing the energy of an impact, especially for a motor vehicle, comprising a cross-member (12) extending in a transverse direction (Y) and at least one tubular absorption element (14) extending in a longitudinal direction (X) perpendicular to the transverse direction (Y) between two ends (14A, 14B), one (14A) of which cooperates with the cross-member (12), **characterised in that** it comprises, for each tubular element (14), a connecting member (24) according to any one of claims 1 to 5, the plate (26) of which is attached to the cross-member (12) and the guide portion (28) of which is housed in the tubular absorption element (14) and fixed to the tubular absorption element (14) by the fixing means (30).

7. Absorption device (10) according to claim 6, wherein the fixing means (30) comprise locking projections (32), especially three locking projections (32) distributed circumferentially on the guide portion (28), each locking projection cooperating with a complementary notch (22) formed in the tubular absorption element (14).

8. Absorption device (10) according to claim 6 or 7, wherein the tubular absorption element (14) is made of a composite material, comprising a matrix and continuous fibres.
